# EUROPEAN PATENT APPLICATION

(11) **EP 4 624 839 A1**
(43) Date of publication of application: **01.10.2025**
(21) Application number: 25166522.0
(22) Date of filing: 27.03.2025
(51) Int. Cl.: F25D 23/02

(54) **REFRIGERATOR**

(30) Priority: 27.03.2024 KR 20240041701
(71) Applicant: LG Electronics Inc., Yeongdeungpo-gu Seoul 07336 (KR)
(72) Inventor: HONG, Euddeum, Seoul (KR)
(74) Representative: Ter Meer Steinmeister & Partner

(57) **Abstract**

A refrigerator is provided. According to one embodiment, the refrigerator includes a cabinet forming a storage space; and a door opening and closing the storage space; in which the door includes a panel assembly including a front panel forming a front surface of the door and made of a transparent material and a rear panel disposed at a rear of the front panel and made of a transparent material; a door liner forming a rear surface of the door and including a liner opening being shielded by the rear panel; an insulation material filled in a space between a perimeter of the panel assembly and the door liner; and a sealing member disposed between the panel assembly and the door liner to seal so that the insulation material does not leak toward the liner opening.

## Description

### BACKGROUND

The present disclosure relates to a refrigerator.

In general, a refrigerator is a home appliance that can store food at low temperatures in an internal storage space that is shielded by a door. To this end, the refrigerator is configured to cool the inside of the storage space by using cold air generated through heat exchange with a refrigerant that circulates a refrigeration cycle, thereby allowing the stored food to be stored in an optimal condition.

Recently, refrigerators are becoming larger and more multifunctional in line with the changing eating habits and the trend toward higher quality products, and refrigerators equipped with various structures and convenient devices for the convenience of users and efficient use of internal space are being released.

The storage space of the refrigerator can be opened and closed by a door. In addition, according to the arrangement of the storage space and the structure of the door that opens and closes the storage space, the refrigerator can be classified into various types.

Typically, refrigerators have a problem in that you cannot check the food inside without opening the door. In other words, you have to open the door to check whether the food you want is stored in the space inside the refrigerator or in a separate storage space provided in the door. In addition, if you do not know the exact location of the food, the time or number of times you open the door may increase, and in this case, there is a problem that unnecessary cold air leakage may occur.

Recently, refrigerators have been developed that make part of the door transparent or allow the inside to be seen to solve these problems.

### SUMMARY

An object of an embodiment of the present disclosure is to provide a structure capable of hermetically sealing between a door liner and a panel assembly.

An object of an embodiment of the present disclosure is to seal a door liner and a panel assembly with a simplified structure to minimize the bezel of the panel assembly.

An object of an embodiment of the present disclosure is to provide a structure capable of stably fixing a sealing member that seals a door liner and a panel assembly.

According to a first aspect of the present technique a refrigerator is provided that includes a cabinet forming a storage space; and a door opening and closing the storage space. The door includes a panel assembly including a front panel forming a front surface of the door and made of a transparent material and a rear panel disposed at a rear of the front panel and made of a transparent material; a door liner forming a rear surface of the door and including a liner opening being shielded by the rear panel; an insulation material filled in a space between a perimeter of the panel assembly and the door liner; and a sealing member disposed between the panel assembly and the door liner to seal so that the insulation material does not leak toward the liner opening.

According to a second aspect of the present technique a refrigerator is provided that includes: a cabinet forming a storage space; and a door configured to open and close the storage space. The door includes: a panel assembly including a front panel forming a front surface of the door and made of a transparent material, and a rear panel disposed at a rear of the front panel and made of a transparent material, a door liner forming a rear surface of the door and including a liner opening, wherein the liner opening is shielded by the rear panel; an insulation material filled in a space between the door liner and a perimeter of the panel assembly; and a sealing member disposed between the rear panel and the door liner and sealing the insulation material (100) from the liner opening.

### The refrigerator according to the first aspect or the second aspect may include one or more of the following.

The door liner may include a protrusion part disposed at a rear of the rear panel and/or protruding rearward from the rear panel; and an inner surface part extending from an inner side of the protrusion part toward the rear panel, and a front end part of the inner surface part may be disposed to face a rear surface of the rear panel.

The sealing member may include a first sealing part facing the inner surface part; and a second sealing part formed by bending outward from a front end part of the first sealing part and facing the rear surface of the rear panel.

The door liner may further include a guide rib formed on an outer surface of the inner surface part, and the first sealing part may be partially inserted into the guide rib and/or partially inserted into a guide groove formed between the inner surface part and the guide rib.

The guide rib may include a base part protruding from an outer surface of the inner surface part; and a support part protruding forward from the base part and spaced apart from the outer surface of the inner surface part, and the first sealing part may be inserted between the inner surface part and the support part.

The guide rib may include: a base part protruding from an outer surface of the inner surface part; and a support part protruding forward from the base part and spaced apart from the outer surface of the inner surface part. The guide groove may be formed between the support part and the outer surface of the inner surface part.

The end part of the support part may be located at a rear of the second sealing part.

The inner surface part may include a rear inner surface part to which the base part is connected; and a front inner surface part extending from the rear inner surface part to a front and inwardly recessed, and the first sealing part may face the front inner surface part.

The inner surface part may include: a rear inner surface part to which the base part is connected; and a front inner surface part extending from the rear inner surface part to a front and inwardly recessed. The guide groove may be formed between the front inner surface part and the support part.

The sealing member may further include a sealing protrusion part protruding from a rear end part of the first sealing part toward an outer surface of the inner surface part and coming into contact with the inner surface part, and the sealing protrusion part may be restrained by a front end part of the rear inner surface part.

A rear end part of the first sealing part may be in contact with a front end part of the base part.

The panel assembly may further include a spacer provided between the front panel and the rear panel to form an insulation layer, and the spacer and the guide rib may overlap in a front and rear direction.

An adhesive material may be disposed between the second sealing part and the rear surface of the rear panel.

The sealing member may further include a sealing protrusion part that protrudes from a rear end part of the first sealing part toward an outer surface of the inner surface part and comes into contact with the inner surface part.

The inner surface part may include a front inner surface part facing the first sealing part; and a rear inner surface part extending from the front inner surface part in a rear direction and protruding outwardly, and the sealing protrusion part may be restrained by a front end part of the rear inner surface part.

The panel assembly may further include a spacer provided between the front panel and the rear panel to form an insulation layer, a front end part of the inner surface part may be in contact with the rear surface of the rear panel, and the protrusion part may overlap the spacer in a front and rear direction.

The inner surface part may include a lighting device mounting part cutting toward a rear and on which a lighting device is mounted to illuminate a rear space of the door, and the sealing member may not overlap with the lighting device mounting part in a front and rear direction.

The protrusion part and the inner surface part may be formed to surround the liner opening, and the inner surface part may include a first inner surface part forming an upper end of the liner opening; a second inner surface part forming both side ends of the liner opening; and a third inner surface part forming a lower end of the liner opening, and the sealing member may be coupled to the first inner surface part and the second inner surface part.

The door liner may further include a first guide rib formed on an outer surface of the first inner surface part; and a second guide rib formed on an outer surface of the second inner surface part, the sealing member may include a first sealing part facing the inner surface; and a second sealing part formed by bending outward from a front end part of the first sealing part and facing a rear surface of the rear panel. The first sealing part may be partially inserted into each of the first guide rib and the second guide rib, or wherein the first sealing part may be partially inserted into each of a first guide groove formed between the first inner surface and the first guide rib, and a second guide rib formed between the second inner surface and the second guide rib.

The following effects can be expected from the refrigerator according to the proposed embodiment.

According to a refrigerator according to an embodiment of the present disclosure, a space between a door liner and a panel assembly can be sealed tightly.

According to a refrigerator according to an embodiment of the present disclosure, the door liner and the panel assembly can be sealed with a simplified structure to minimize the bezel of the panel assembly.

According to a refrigerator according to an embodiment of the present disclosure, a sealing member that seals a door liner and a panel assembly can be stably fixed.

### BRIEF DESCRIPTION OF THE DRAWINGS

FIG. 1 is a front view illustrating a refrigerator according to one embodiment.
FIG. 2 is a front view illustrating a state where a door of a refrigerator according to one embodiment opens.
FIG. 3 is an exploded perspective view illustrating a door according to one embodiment.
FIG. 4 is an enlarged view illustrating area A of FIG. 3.
FIG. 5 is an enlarged view illustrating area B of FIG. 3.
FIGS. 6 and 7 are views illustrating the coupling relationship between the door liner and the sealing member.
FIG. 8 is a cross-sectional view taken along line 8-8 of FIG. 2.
FIG. 9 is an enlarged perspective view illustrating area C of FIG. 8.
FIG. 10 is an enlarged view illustrating area D of FIG. 9.
FIG. 11 is a cross-sectional view taken along line 11-11 of FIG. 2.
FIG. 12 is an enlarged perspective view illustrating area E of FIG. 11.
FIGS. 13 and 14 are views illustrating the coupling relationship of a door liner and a sealing member according to another embodiment.
FIG. 15 is a partial cross-sectional view illustrating a door according to another embodiment.
FIG. 16 is a partial cross-sectional view illustrating a door according to another embodiment.

### DETAILED DESCRIPTION OF THE EMBODIMENTS

Hereinafter, specific embodiments of the present disclosure will be described in detail with reference to the drawings. However, the present disclosure is not limited to the embodiments in which the idea of the present disclosure is presented, and other regressive disclosures or other embodiments included within the scope of the idea of the present disclosure can be easily proposed by adding, changing, deleting, or the like other components.

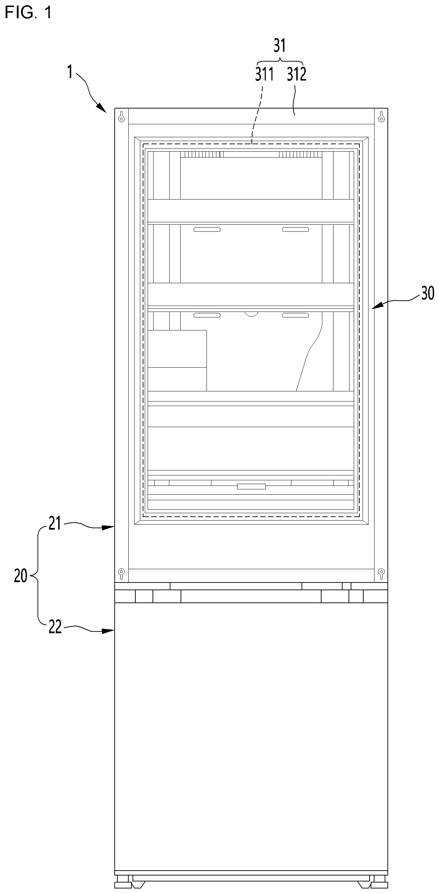

Before explanation, the direction is defined. In the embodiment of the present disclosure, the direction in which the front surface of the door as illustrated in FIG. 1 faces can be defined as forward, the direction toward the cabinet based on the front surface of the door can be defined as rearward, the direction toward the floor surface on which the refrigerator is installed can be defined as downward, and the direction away from the floor surface can be defined as upward.

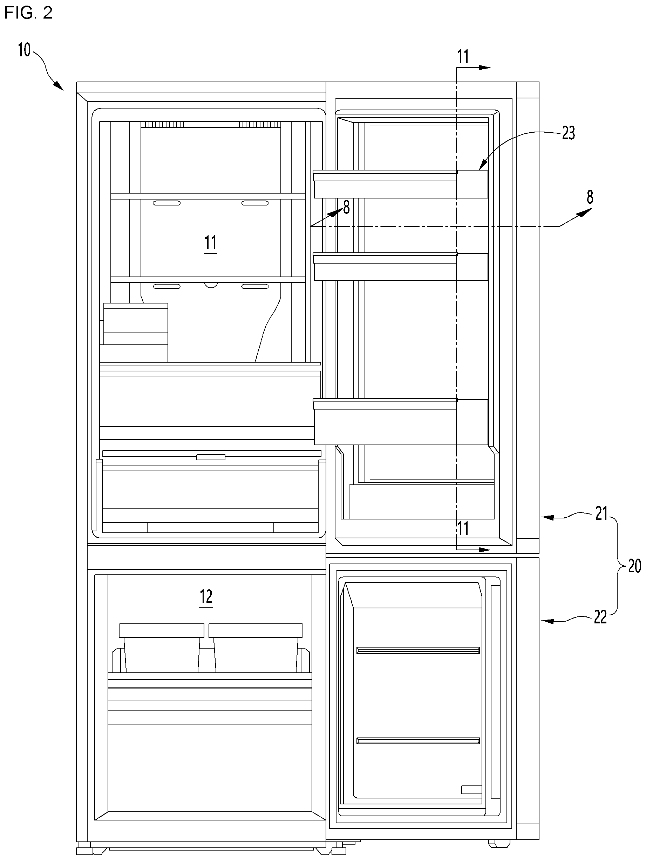

FIG. 1 is a front view illustrating a refrigerator according to one embodiment. FIG. 2 is a front view illustrating a state where a door of a refrigerator according to one embodiment opens.

As illustrated, a refrigerator 1 according to one embodiment may include a cabinet 10 forming a storage space and a door 20 for opening and closing the storage space.

The storage space of the cabinet 10 can be partitioned vertically. The storage space can include a first storage compartment 11 and a second storage compartment 12 located below the first storage compartment 11. For example, the first storage compartment 11 can be a refrigerating compartment and the second storage compartment 12 can be a freezing compartment.

The door 20 may include a first door 21 for opening and closing the first storage compartment 11 and a second door 22 for opening and closing the second storage compartment 12. The first door 21 may be a refrigerating compartment door, and the second door 22 may be a freezer door. For example, the first door 21 and the second door 22 may be rotary doors that open and close the first storage compartment 11 and the second storage compartment 12, respectively, by rotation.

Meanwhile, the first door 21 may include a panel assembly 30 that allows a view of the storage space. The panel assembly 30 may be selectively made viewable by turning on and off a lighting device 80 to be described later.

The panel assembly 30 may include a front panel 31 forming the front surface of the first door 21.

The front panel 31 can form the entire front surface of the first door 21. The front panel 31 can include a see-through part 311 configured to allow viewing of the inside of the first storage compartment 11 and an opaque bezel part 312 disposed around the see-through part 311.

The see-through part 311 may be selectively made transparent to allow identification of food stored in the first storage compartment 11 or the door basket 23. The bezel part 312 may be disposed to surround the see-through part 311.

Below, the structure of the first door 21 will be examined in more detail with reference to the drawings.

Below, the description will focus on the first door 21, but the present disclosure is not limited to the type or location of the door and can be applied to all doors 20 equipped with a panel assembly 30.

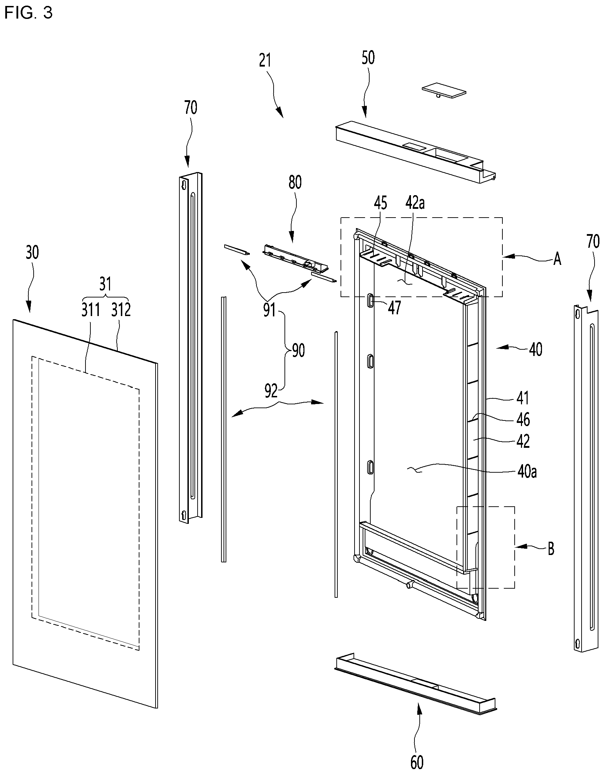

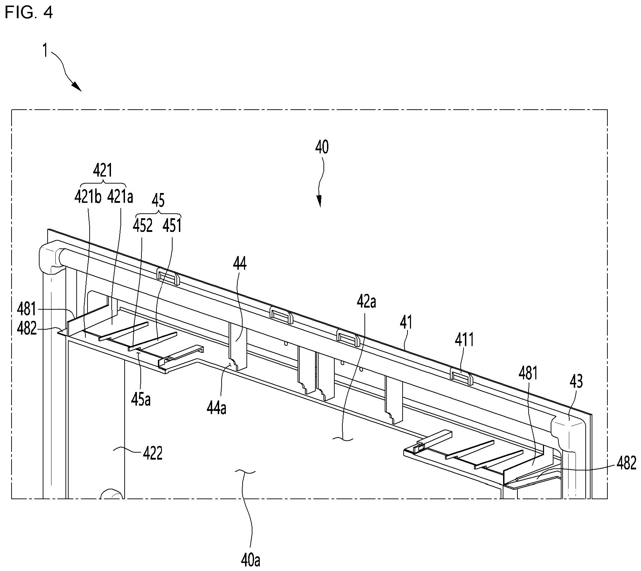

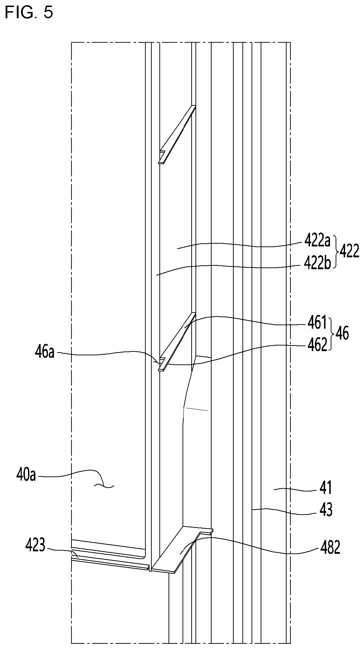

FIG. 3 is an exploded perspective view illustrating a door according to one embodiment. FIG. 4 is an enlarged view illustrating area A of FIG. 3. FIG. 5 is an enlarged view illustrating area B of FIG. 3.

Referring to FIGS. 3 to 5, a first door 21 according to one embodiment may include a panel assembly (30) forming a front surface, a door liner 40 forming a rear surface, an upper cap decoration 50 forming an upper surface, a lower cap decoration 60 forming a lower surface, a side decoration 70 forming both side surfaces, a lighting device 80 illuminating the rear of the first door 21, and a sealing member 90 sealing between the panel assembly 30 and the door liner 40.

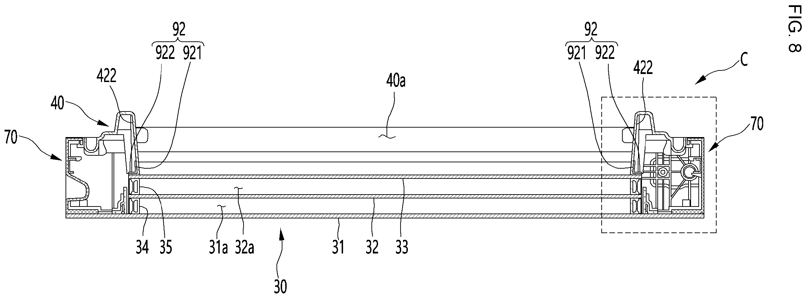

As will be described later with reference to FIG. 8, the panel assembly 30 may include a front panel 31 forming the front surface, a rear panel 33 forming the rear surface, and a middle panel 32 disposed between the front panel 31 and the rear panel 33.

The front panel 31, middle panel 32, and rear panel 33 constituting the panel assembly 30 may be formed of a transparent material such as glass or plastic.

The door liner 40 is disposed at the rear of the panel assembly (30) and can form the rear surface of the first door 21. The door liner 40 can have a liner opening 40a formed that is shielded by the rear panel 33 when the panel assembly 30 is mounted.

The door liner 40 may include a rear surface part 41 disposed around the liner opening 40a, and an inner surface part 42 bent forward from the inner end part of the rear surface part 41.

The rear surface part 41 can form the outermost perimeter of the door liner 40 to form the outer appearance of the door liner 40. At the upper end of the rear surface part 41, a rear coupling part 411 on which an upper cap decoration 50 is mounted can be formed.

Meanwhile, a gasket groove 43 may be formed on the rear surface part 41 to which a gasket is mounted along the rear periphery of the door liner 40. The gasket groove 43 may extend along the rear surface part 41 formed to surround the liner opening 40a and may be formed to be recessed toward the front.

The inner surface part 42 may include a first inner surface part 421 positioned at the upper end of the liner opening 40a, second inner surface parts 422 positioned at both side ends of the liner opening 40a, and a third inner surface part 423 positioned at the lower end of the liner opening 40a. The first to third inner surface parts 421, 422, 423 are formed to surround the liner opening 40a and may be connected to each other. For example, both side ends of the first inner surface part 421 may be connected to the second inner surface part 422. In addition, both side ends of the third inner surface part 423 may be connected to the second inner surface part 422. In other words, the first inner surface part 421 and the third inner surface part 423 may be connected by the second inner surface part 422.

The first inner surface part 421 may be partially cut toward the rear and may include a lighting device mounting part 42a on which a lighting device 80 is mounted. In the region of the first inner surface part 421 where the lighting device mounting part 42a is formed, a plurality of reinforcing ribs 44 may be formed. The plurality of reinforcing ribs 44 may be arranged along the extension direction of the first inner surface part 421. The reinforcing ribs 44 may include a reinforcing rib recessed part 44a that is recessed toward the rear to prevent interference with the lighting device 80 mounted on the door liner 40.

A plurality of first guide ribs 45 may be disposed on the outer surface of the first inner surface part 421. The plurality of first guide ribs 45 may be arranged along the extension direction of the first inner surface part 421. A sealing member 90 described later may be mounted on the first guide rib 45. Specifically, a first sealing member 91 may be mounted on the first guide rib 45. The first guide rib 45 may have a shape that protrudes upward from the outer surface of the first inner surface part 421. The first guide rib 45 may include a first base part 451 that protrudes upward from the outer surface of the first inner surface part 421 and a first support part 452 that protrudes forward from the first base part 451. The first support part 452 may be formed such that an upper part protrudes forward from the front end part of the first base part 451. The first support part 452 may be spaced upward from the first inner surface part 421.

The first inner surface part 421 may include a first rear inner surface part 421a on which the first base part 451 is disposed, and a first front inner surface part 421b positioned in front of the first rear inner surface part 421a and recessed inwardly.

For example, in the first inner surface part 421, a configuration corresponding to the first base part 451 may be a first rear inner surface part 421a, and a configuration corresponding to the first support part 452 may be a first front inner surface part 421b. In other words, the first base part 451 may protrude upward from the first rear inner surface part 421a. The first support part 452 may be positioned above the first front inner surface part 421b and may be spaced apart from the first front inner surface part 421b. A first guide groove 45a is formed between the first support part 452 and the first front inner surface part 421b, and a first sealing member 91, which will be described later, may be inserted and fixed into the first guide groove 45a.

A first side rib 481 may be formed on both left and right ends of the first inner surface part 421. The first side rib 481 may protrude upward more than the first guide rib 45.

A plurality of second guide ribs 46 may be disposed on the outer surface of the second inner surface part 422. The plurality of second guide ribs 46 may be arranged along the extension direction of the second inner surface part 422. A sealing member 90 described later may be mounted on the second guide rib 46. Specifically, a second sealing member 92 may be mounted on the second guide rib 46. The second guide rib 46 may have a shape that protrudes outwardly from the outer surface of the second inner surface part 422. The second guide rib 46 may include a second base part 461 that protrudes outwardly from the outer surface of the second inner surface part 422 and a second support part 462 that protrudes forwardly from the second base part 461. The second support part 462 may be formed by protruding an outer part forward from the front end part of the second base part 461. The second support part 462 may be spaced outward from the second inner surface part 422.

The second inner surface part 422 may include a second rear inner surface part 422a on which the second base part 461 is disposed, and a second front inner surface part 422b positioned in front of the second rear inner surface part 422a and recessed inwardly.

For example, in the second inner surface part 422, the configuration corresponding to the second base part 461 may be the second rear inner surface part 422a, and the configuration corresponding to the second support part 462 may be the second front inner surface part 422b. **In** other words, the second base part 461 may protrude outwardly from the second rear inner surface part 422a. The second support part 462 may be positioned on the outer side of the second front inner surface part 422b and may be spaced apart from the second front inner surface part 422b. A second guide groove 46a is formed between the second support part 462 and the second front inner surface part 422b, and a second sealing member 92, which will be described later, may be inserted and fixed into the second guide groove 46a.

A second side rib 482 may be formed at the upper and lower ends of the second inner surface part 422. The second side rib 482 may protrude outward more than the second guide rib 46.

An upper cap decoration 50 and a lower cap decoration 60 may be provided on the upper and lower surfaces of the first door 21. A side decoration 70 may be formed on both left and right sides of the first door 21.

Meanwhile, when the upper cap decoration 50, lower cap decoration 60, a pair of side decorations 70, panel assembly 30, and door liner 40 are coupled, a space is formed inside the first door 21, and the space can be filled with insulation material 100.

The lighting device 80 can be mounted on the upper end of the door liner 40. For example, the lighting device 80 can be mounted on a lighting device mounting part 42a formed on the inner surface part 42.

The lighting device 80 can illuminate the rear space of the first door 21. For example, when the lighting device 80 is turned on, the rear space is visualized through the see-through part 311, and when the lighting device 80 is turned off, the see-through part 311 becomes opaque. In addition, the lighting device 80 can glow in various colors. Therefore, the rear space of the first door 21 can be visualized through the see-through part 311 and at the same time, an outer appearance of various colors can be expressed.

A sealing member 90 may be mounted on the inner surface part 42 of the door liner 40. The sealing member 90 may have a shape that extends along the shape of the inner surface part 42 on which it is mounted. For example, the sealing member 90 may include a first sealing member 91 mounted on the first inner surface part 421 and a second sealing member 92 mounted on the second inner surface part 422. **In** other words, the first sealing member 91 may have a shape that extends along the shape of the first inner surface part 421, and the second sealing member 92 may have a shape that extends along the shape of the second inner surface part 422.

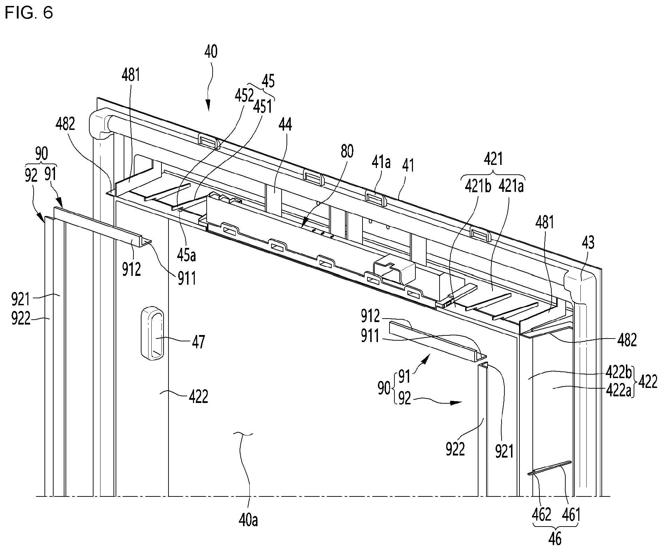

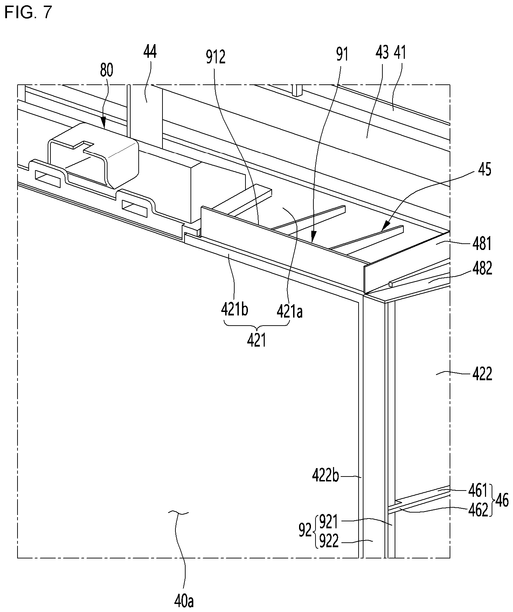

FIGS. 6 and 7 are views illustrating the coupling relationship between the door liner and the sealing member.

Referring to FIGS. 6 and 7, a sealing member 90 can be mounted on the door liner 40. The sealing member 90 serves as a means for sealing between the door liner 40 and the panel assembly 30, and can seal the inner space of the first door 21 defined by the panel assembly 30, the door liner 40, the upper cap decoration 50, the lower cap decoration 60, and a pair of side decorations 70 so that the insulation material (100) filled therein does not leak to the outside.

As described above, the sealing member 90 may include a first sealing member 91 mounted on the first inner surface part 421 and a second sealing member 92 mounted on the second inner surface part 422.

The first sealing member 91 may include a first sealing part 911 inserted into a first guide groove 45a formed between the first front inner surface part 421b and the first support part 452 and a second sealing part 912 attached to the rear surface of the panel assembly 30. The second sealing part 912 may be formed by being bent outward from the front end part of the first sealing part 911.

The first sealing part 911 of the first sealing member 91 may face the first inner surface part 421. The second sealing part 912 of the first sealing member 91 may face the rear surface of the rear panel 33.

The front end part of the first support part 452 of the first guide rib 45 may be disposed to face the rear surface of the second sealing part 912 of the first sealing member 91. For example, the front end part of the first support part 452 of the first guide rib 45 may be in contact with the rear surface of the second sealing part 912 of the first sealing member 91.

In addition, the front end part of the first base part 451 of the first guide rib 45 may be disposed to face the rear end part of the first sealing part 911 of the first sealing member 91. For example, the front end part of the first base part 451 of the first guide rib 45 may be in contact with the rear end part of the first sealing part 911 of the first sealing member 91.

Through the structure, the first sealing member 91 can be fixed by the first guide rib 45 without falling off when mounted on the door liner 40 to seal between the panel assembly 30 and the door liner 40.

The lighting device mounting part 42a may not overlap with the sealing member 90 in the front and rear direction. For example, a plurality of first sealing members 91 may be disposed on both sides with the lighting device 80 therebetween. The first sealing member 91 may not be disposed in the lighting device mounting part 42a of the first inner surface part 421. The front area of the lighting device mounting part 42a may be sealed by the front end of the lighting device 80.

The second sealing member 92 may include a first sealing part 921 inserted into a second guide groove 46a formed between the second front inner surface part 422b and the second support member 462 and a second sealing part 922 attached to the rear surface of the panel assembly 30. The second sealing part 922 may be formed by being bent outward from the front end part of the first sealing part 921.

The first sealing part 921 of the second sealing member 92 may face the second inner surface part 422. The second sealing part 922 of the second sealing member 92 may face the rear surface of the rear panel 33.

The front end part of the second support part 462 of the second guide rib 46 may be disposed to face the rear surface of the second sealing part 922 of the second sealing member 92. For example, the front end part of the second support part 462 of the second guide rib 46 may be in contact with the rear surface of the second sealing part 922 of the second sealing member 92.

In addition, the front end part of the second base part 461 of the second guide rib 46 may be disposed to face the rear end part of the first sealing part 921 of the second sealing member 92. For example, the front end part of the second base part 461 of the second guide rib 46 may be in contact with the rear end part of the first sealing part 921 of the second sealing member 92.

Through the structure, the second sealing member 92 can be fixed by the second guide rib 46 without falling off when mounted on the door liner 40 to seal between the panel assembly 30 and the door liner 40.

Hereinafter, a cross-sectional structure of a first door 21 according to one embodiment will be described with reference to FIGS. 8 to 13. Specifically, the coupling structure between the panel assembly 30 and the door liner 40 when the sealing member 90 is mounted will be described.

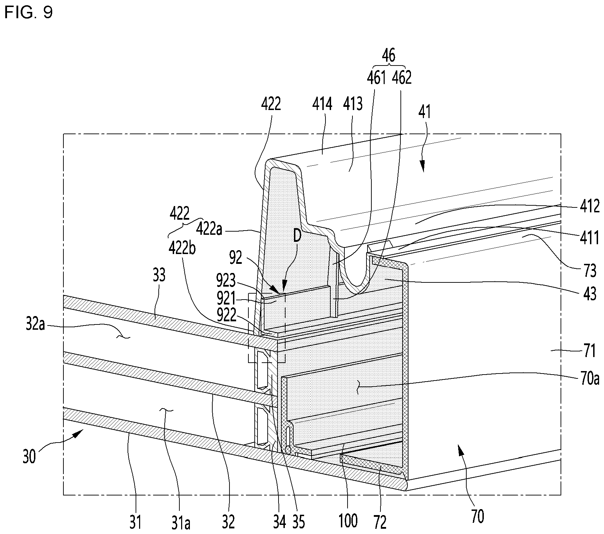

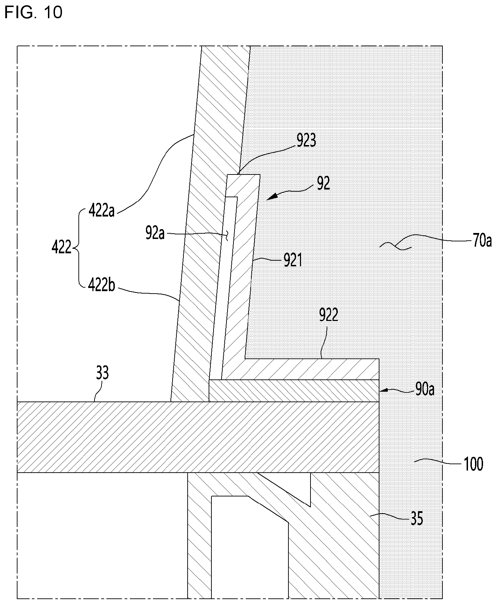

FIG. 8 is a cross-sectional view taken along line 8-8 of FIG. 2. FIG. 9 is an enlarged perspective view illustrating area C of FIG. 8. FIG. 10 is an enlarged view illustrating area D of FIG. 9.

Referring to FIGS. 8 to 10, a panel assembly 30 included in a first door 21 according to one embodiment may include a front panel 31 forming a front surface, a rear panel 33 forming a rear surface, and a middle panel 32 positioned between the front panel 31 and the rear panel 33.

Between the front panel 31 and the middle panel 32, a first spacer 34 may be provided to form a first insulation layer 31a between the front panel 31 and the middle panel 32. The first spacer 34 may be disposed along the perimeter of the front panel 31 and the middle panel 32. The first spacer 34 may connect the front panel 31 and the middle panel 32.

Between the middle panel 32 and the rear panel 33, a second spacer 35 may be provided to form a second insulation layer 32a between the middle panel 32 and the middle panel 33. The second spacer 35 may be disposed along the perimeter of the middle panel 32 and the rear panel 33. The second spacer 35 may connect the middle panel 32 and the rear panel 33.

The first and second insulation layers 31a, 32a may be injected with an insulation gas to secure insulation performance. For example, the insulation gas may be argon (Ar) gas. For example, the thickness of the first and second insulation layers 31a, 32a is approximately 12 mm to 14 mm, respectively, which is most efficient for insulation while minimizing the thickness of the panel assembly 30.

The first and second spacers 34, 35 may be disposed to overlap the guide ribs 45, 46 in the front and rear direction.

Meanwhile, the rear surface part 41 of the door liner 40 may include a rear coupling part 411 that is coupled to the side decoration 70, a rear connection part 412 that is spaced apart from the rear coupling part 411 with a gasket groove 43 therebetween, a rear inclined part 413 that is inclined backward from the inner end part of the rear connection part 412, and a rear protrusion part 414 that is formed by bending inward from the inner end part of the rear inclined part 413.

The rear coupling part 411 is positioned at the outermost part of the door liner 40 and can be coupled with the side decoration 70. The inner end part of the rear coupling part 411 can be connected to the outer side of the gasket groove 43.

The rear connection part 412 may be disposed on the inner side of the gasket groove 43. The outer end part of the rear connection part 412 may be connected to the gasket groove 43. In other words, the gasket groove 43 may be disposed between the rear connection part 412 and the rear coupling part 411. In addition, the rear connection part 412 may connect the rear inclined part 413 and the gasket groove 43.

The rear inclined part 413 can be connected to the inner end part of the rear connection part 412. The rear inclined part 413 can be formed by bending backward from the inner end part of the rear connection part 412. back side The inner end part of the rear inclined part 413 can be connected to the rear protrusion part 414.

The rear protrusion part 414 may protrude rearwardly from the rear panel 33. The rear protrusion part 414 may constitute the rearmost end part of the door liner 40. The rear protrusion part 414 may be disposed between the inner surface part 42 and the rear inclined part 413. The outer end part of the rear protrusion part 414 may be connected to the rear inclined part 413, and the inner end part may be connected to the inner surface part 42. In other words, the inner surface part 42 may extend from the inner end part of the rear protrusion part 414 toward the rear panel 33. The front end part of the inner surface part 42 may be disposed to face the rear surface of the rear panel 33.

Meanwhile, the side decoration 70 forms the side of the first door 21 and may include a side decoration side surface part 71 extending in the extension direction of the side decoration 70, a side decoration front surface part 72 formed by bending inwardly from the front end part of the side decoration side surface part 71, and a side decoration rear surface part 73 formed by bending inwardly from the rear end part of the side decoration side surface part 71.

The side decoration front surface part 72 can be coupled to the rear surface of the front panel 31. The side decoration rear surface part 73 can be coupled to the rear coupling part 411 of the door liner 40.

The side space 70a formed by the panel assembly 30, door liner 40 and side decoration 70 can be filled with insulation material 100.

Meanwhile, the second sealing member 92 can seal the space between the second inner surface part 422 and the rear panel 33. The second sealing member 92 can prevent the insulation material 100 filled in the side space 70a from leaking toward the rear of the rear panel 33.

The front end part of the second inner surface part 422 may be disposed facing the rear surface of the rear panel 33. For example, the front end part of the second inner surface part 422 may be in contact with the rear surface of the rear panel 33. The second sealing member 92 may seal between the front end part of the second inner surface part 422 and the rear surface of the rear panel 33.

The second sealing member 92 can be attached to the rear surface of the rear panel 33 via the adhesive member 90a. The adhesive member 90a can be disposed between the second sealing part 922 and the rear panel 33. For example, the adhesive member 90a can contact the outer surface of the second front inner surface part 422b. Through this, the adhesive member 90a can seal the space between the second front inner surface part 422b and the rear panel 33.

The first sealing part 921 of the second sealing member 92 may be positioned spaced apart from the second front inner surface part 422b. A sealing space 92a may be formed between the first sealing part 921 of the second sealing member 92 and the second front inner surface part 422b. The sealing space 92a may provide a margin of space when attaching the second sealing member 92 to the rear panel 33, thereby reducing manufacturing process errors.

The second sealing member 92 may further include a sealing protrusion part 923 protruding inward from the rear end part of the first sealing part 921. The first sealing part 921 is mounted to face the second front inner surface part 422b, and the sealing protrusion part 923 of the second sealing member 92 may contact the second front inner surface part 422b. As a result, a sealing may be achieved between the sealing protrusion part 923 and the second front inner surface part 422b. For example, the sealing protrusion part 923 may be restrained by the front end part of the second rear inner surface part 422a.

In other words, the sealing protrusion part 923 can primarily seal by coming into contact with the outer surface of the second front inner surface part 422b. In addition, the adhesive member 90a can secondarily seal between the second front inner surface part 422b and the rear panel 33 by coming into contact with the outer surface of the second front inner surface part 422b.

Through the structure, the second sealing member 92 is stably attached to the rear panel 33, and can seal the space between the panel assembly 30 and the door liner 40.

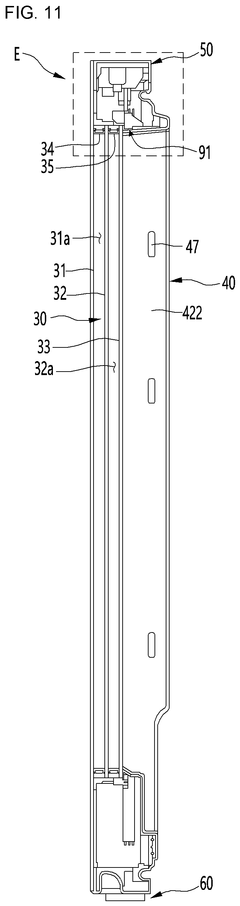

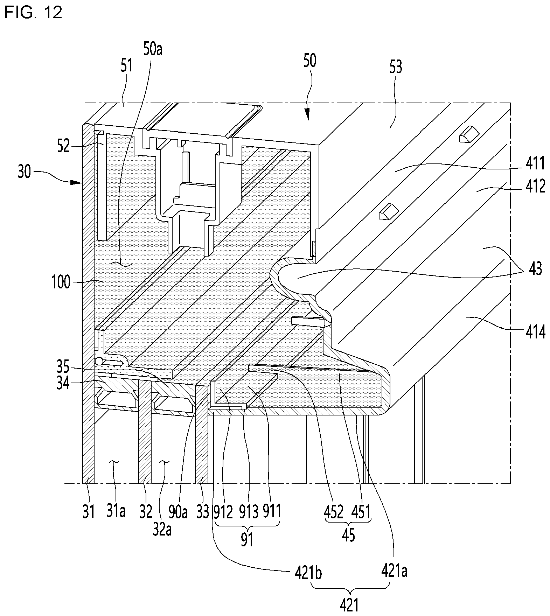

FIG. 11 is a cross-sectional view taken along line 11-11 of FIG. 2. FIG. 12 is an enlarged perspective view illustrating area E of FIG. 11.

Referring to FIGS. 11 and 12, the upper cap decoration 50 forms the upper surface of the first door 21 and may include an upper cap decoration upper surface part 51 extended in the extension direction of the upper cap decoration 50, an upper cap decoration front surface part 52 formed by bending downward from the front end part of the upper cap decoration upper surface part 51, and an upper cap decoration rear surface part 53 formed by bending inward from the rear end part of the upper cap decoration upper surface part 51.

The upper cap decoration front surface part 52 can be coupled to the rear surface of the front panel 31. The upper cap decoration rear surface part 53 can be coupled to the rear coupling part 411 of the door liner 40.

The upper space 50a formed by the panel assembly 30, door liner 40 and upper cap decoration 50 can be filled with insulation material 100.

Meanwhile, the first sealing member 91 can seal the space between the first inner surface part 421 and the rear panel 33. The first sealing member 91 can prevent the insulation material 100 filled in the upper space 50a from leaking toward the rear of the rear panel 33.

The front end part of the first inner surface part 421 may be disposed facing the rear surface of the rear panel 33. For example, the front end part of the first inner surface part 421 may be in contact with the rear surface of the rear panel 33. The first sealing member 91 may seal between the front end part of the first inner surface part 421 and the rear surface of the rear panel 33.

The first sealing member 91 can be attached to the rear surface of the rear panel 33 via the adhesive member 90a. The adhesive member 90a can be disposed between the second sealing member 912 and the rear panel 33. For example, the adhesive member 90a can be in contact with the outer surface of the first front inner surface part 421b. In this way, the adhesive member 90a can seal the space between the first front inner surface part 421b and the rear panel 33.

The first sealing part 911 of the first sealing member 91 may be disposed to be spaced apart from the first front inner surface part 421b. Although not illustrated, a sealing space may be formed between the first sealing part 911 of the first sealing member 91 and the first front inner surface part 421b, similar to the sealing space 92a of FIG. 10. The sealing space may provide a margin of space when attaching the first sealing member 91 to the rear panel 33, thereby reducing manufacturing process errors.

The first sealing member 91 may further include a sealing protrusion part 913 protruding inward from the rear end part of the first sealing part 911. The first sealing part 911 is mounted so as to face the first front inner surface part 421b, and the sealing protrusion part 913 of the first sealing member 91 may contact the first front inner surface part 421b. As a result, a sealing may be achieved between the sealing protrusion part 913 and the first front inner surface part 421b. For example, the sealing protrusion part 913 may be restrained by the front end part of the first rear inner surface part 421a.

In other words, the sealing protrusion part 913 can primarily seal by coming into contact with the outer surface of the first front inner surface part 421b. In addition, the adhesive member 90a can secondarily seal between the first front inner surface part 421b and the rear panel 33 by coming into contact with the outer surface of the first front inner surface part 421b.

Through the above structure, the first sealing member 91 is stably attached to the rear panel 33 and can seal the space between the panel assembly 30 and the door liner 40.

According to a refrigerator 1 according to an embodiment of the present disclosure, a sealing member 90 having at least one side attached to the rear surface of the panel assembly 30 and the other side mounted on the door liner 40 can be used to seal the space between the panel assembly 30 and the door liner 40 airtightly.

Typically, the area of the rear surface part 41 of the door liner 40 in the refrigerator 1 is standardized, so reducing the area of the rear surface part 41 to reduce the area of the bezel part 312 formed on the front surface of the panel assembly 30 may be limited.

A refrigerator 1 according to one embodiment can seal tightly between a panel assembly 30 and a door liner 40 without applying a separate sealing structure, such as bending an end part of an inner surface part 42 through a sealing member 90 of a bent structure. Through this, the area of a bezel part 312 formed on the front of the panel assembly 30 can be minimized.

Specifically, the inner surface part 42 extending from the rear protrusion part 414 of the door liner 40 toward the rear surface of the rear panel 33 may not include a bent structure for sealing. Accordingly, the distance between the side decoration side surface part 71 of the side decoration 70 and the front end part of the inner surface part 42 can be reduced, so that the area of the bezel part 312 can be minimized.

According to a refrigerator 1 according to an embodiment of the present disclosure, the panel assembly 30 and the door liner 40 can be sealed in a simplified structure through a sealing member 90 at least one side of which is attached to the rear surface of the panel assembly 30 and the other side of which is mounted on the door liner 40, thereby minimizing the bezel of the panel assembly 30.

According to a refrigerator 1 according to an embodiment of the present disclosure, a sealing member 90 can be stably fixed through a guide rib 45, 46 formed on a door liner 40.

Hereinafter, another embodiment of the first door 21 structure will be described. In the following embodiments, descriptions of the same configuration as the already described embodiment will be omitted or simplified, and descriptions will be focused on differences.

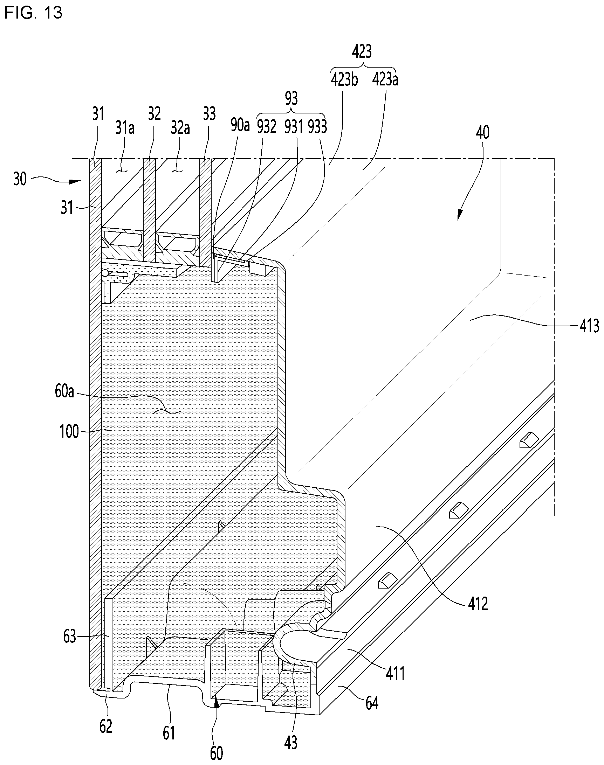

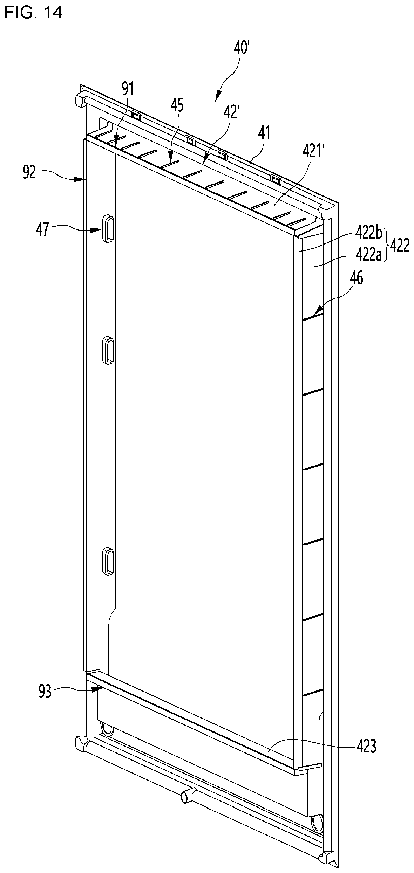

FIGS. 13 and 14 are views illustrating the coupling relationship of a door liner and a sealing member according to another embodiment.

Referring to FIGS. 13 and 14, the first door 21 according to the present embodiment includes a door liner 40' having a structure different from the structure described above, and a third sealing member 93 may be further applied to the lower part of the door liner 40.

The door liner 40' included in the first door 21 according to the present embodiment may omit the lighting device mounting part 42a. In other words, the first inner surface part 421' has a shape extending in the left and right direction, and a plurality of first guide ribs 45 may be arranged on the outer surface of the first inner surface part 421'.

The lower cap decoration 60 forms the lower surface of the first door 21 and may include a lower cap decoration lower surface part 61 extending in the extension direction of the lower cap decoration 60, a lower cap decoration support part 62 formed at the front end of the lower cap decoration lower surface part 61 and supporting the lower end of the front panel 31, a lower cap decoration front surface part 63 formed by bending upward from the front end part of the lower cap decoration lower surface part 61, and a lower cap decoration rear surface part 64 formed by bending inward from the rear end part of the lower cap decoration lower surface part 61.

The lower cap decoration front part 63 can be coupled to the rear surface of the front panel 31. The lower cap decoration rear surface part 64 can be coupled to the rear coupling part 411 of the door liner 40.

The lower space 60a formed by the panel assembly 30, door liner 40 and lower cap decoration 60 can be filled with insulation material 100.

Meanwhile, the third sealing member 93 can seal the space between the third inner surface part 423 and the rear panel 33. The third sealing member 93 can prevent the insulation material 100 filled in the lower space 60a from leaking toward the rear of the rear panel 33.

The front end part of the third inner surface part 423 may be disposed facing the rear surface of the rear panel 33. For example, the front end part of the third inner surface part 423 may be in contact with the rear surface of the rear panel 33. The third sealing member 93 may seal between the front end part of the third inner surface part 423 and the rear surface of the rear panel 33.

The third sealing member 93 can be attached to the rear surface of the rear panel 33 via the adhesive member 90a. The adhesive member 90a can be disposed between the second sealing part 932 and the rear panel 33. For example, the adhesive member 90a can be in contact with the outer surface of the third front inner surface 423b. In this way, the adhesive member 90a can seal the space between the third front inner surface 423b and the rear panel 33.

The third sealing part 931 of the third sealing member 93 may be disposed spaced apart from the third front inner surface part 423b. Although not illustrated, a sealing space may be formed between the third sealing part 931 of the third sealing member 93 and the third front inner surface part 423b, similar to the sealing space 92a of FIG. 10. The sealing space may provide a margin of space when attaching the third sealing member 93 to the rear panel 33, thereby reducing manufacturing process errors.

The third sealing member 93 may further include a sealing protrusion part 933 protruding inward from the rear end part of the third sealing member 931. The third sealing member 931 is mounted so as to face the third front inner surface part 423b, and the sealing protrusion part 933 of the third sealing member 93 may contact the third front inner surface part 423b. Through this, a sealing may be achieved between the sealing protrusion part 933 and the third front inner surface part 423b. For example, the sealing protrusion part 933 may be restrained by the front end part of the third rear inner surface 423a.

In other words, the sealing protrusion part 933 can primarily seal by coming into contact with the outer surface of the third front inner surface part 423b. In addition, the adhesive member 90a can secondarily seal between the third front inner surface part 423b and the rear panel 33 by coming into contact with the outer surface of the third front inner surface part 423b.

Through the above structure, the third sealing member 93 is stably attached to the rear panel 33, and can seal the space between the panel assembly 30 and the door liner 40.

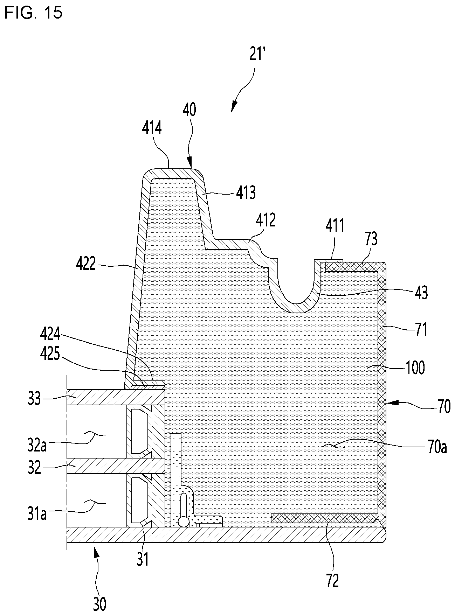

FIG. 15 is a partial cross-sectional view illustrating a door according to another embodiment.

Referring to FIG. 15, the first door 21' according to the present embodiment differs from the first door 21 according to an embodiment in that the door liner 40 further includes a sealing rib 424 formed by bending outward from the front end part of the first inner surface part 422.

In this embodiment, the sealing rib 424 may be formed by being bent outward from the front end part of the first inner surface part 422. FIG. 15 illustrates a structure in which the sealing rib 424 is formed at the front end part of the first inner surface part 422, but is not limited thereto and the sealing rib 424 may be applied to all inner surface parts 42 of the door liner 40. The sealing rib 424 may be attached to the rear surface of the rear panel 33 by an adhesive member 425.

According to the present embodiment, the sealing rib 424 and the rear panel 33 can be primarily sealed between the panel assembly 30 and the door liner 40 by attachment through the adhesive material 425. In addition, the front end part of the inner surface part 42 can be in contact with the rear surface of the rear panel 33 to perform secondary sealing.

The refrigerator 1 according to the present embodiment can seal tightly between the panel assembly 30 and the door liner 40 even without applying a sealing structure that bends the end part of the inner surface part 42 inward through a sealing rib 424 of a bent structure. Through this, the area of the bezel part 312 formed on the front surface of the panel assembly 30 can be minimized.

Specifically, the inner surface part 42 extending from the rear protrusion part 414 of the door liner 40 toward the rear surface of the rear panel 33 may include an outwardly bent sealing rib 424. Accordingly, the distance between the side decoration side surface part 71 of the side decoration 70 and the front end part of the inner surface part 42 may be reduced, thereby minimizing the area of the bezel part 312.

According to a refrigerator 1 according to an embodiment of the present disclosure, the panel assembly 30 and the door liner 40 can be sealed in a simplified structure through a sealing rib 424 bent outward from the front end part of the inner surface part 42, thereby minimizing the bezel of the panel assembly 30.

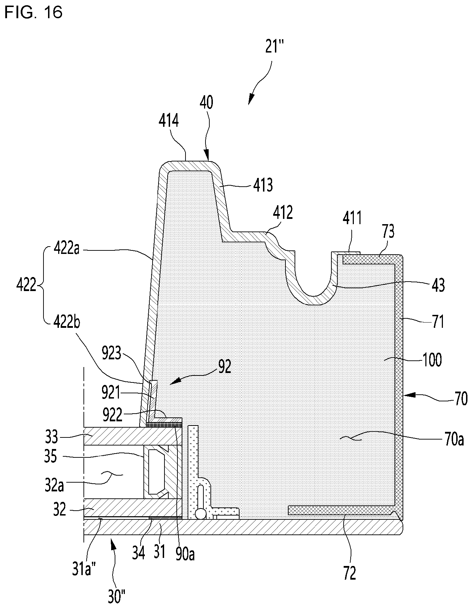

FIG. 16 is a partial cross-sectional view illustrating a door according to another embodiment.

Referring to FIG. 16, the refrigerator door 21" according to the present embodiment is different from the refrigerator door 21 according to one embodiment in that it includes a vacuum insulation layer.

In this embodiment, the panel assembly 30" may include a plurality of panels 31, 32, 33 spaced apart in the front and rear direction. In addition, the panel assembly 30" may include a plurality of insulation layers 31a", 32a. The insulation layers 31a", 32a may be referred to as insulation spaces or insulation areas.

In a state where the first spacer 34" is plastically processed between the front panel 31 and the middle panel 32, a first insulation layer 31a" can be formed between the front panel 31, the middle panel 32 and the first spacer 34". The first insulation layer 31a" is in a vacuum state and can be referred to as a vacuum insulation layer. The cold air at the rear of the panel assembly 30" can be blocked from being transmitted to the front by the first insulation layer 31a".

The first insulation layer 31a" can be formed with a minimum thickness that can effectively block the transmission of cold air from the storage space. For example, the thickness of the first insulation layer 31a" can be formed to be approximately 0.1 mm to 1 mm, thereby minimizing the overall thickness of the panel assembly 30" while ensuring insulation performance and formability. For example, the thickness of the first insulation layer 31a" can be the same as the thickness of the first spacer 34". The thickness of the first insulation layer 31a" can be formed thinner than the thickness of the second insulation layer 32a.

Although not illustrated, an exhaust hole may be formed in the middle panel 32. The exhaust hole may be in communication with the first insulation layer 31a" to exhaust air in the first insulation layer 31a" and may cause the first insulation layer 31a" to be in a vacuum state. The exhaust hole may be located in an area inside the first spacer 34".

Insulation gas may be injected into the second insulation layer 32a formed between the middle panel 32 and the rear panel 33 to secure insulation performance. For example, the insulation gas may be argon (Ar) gas. The thickness of the second insulation layer 32a is approximately 12 mm to 14 mm, which is most efficient for insulation while minimizing the thickness of the panel assembly 30".

Meanwhile, the coupling structure of the second sealing member 92 in the refrigerator door 21" according to the present embodiment may be substantially the same as the structure illustrated in FIG. 10. In other words, the second sealing member 92 may be coupled to the rear panel 33 and the second inner surface part 422. For example, the first sealing part 921 of the second sealing member 92 may be disposed facing the second front inner surface part 422b of the second inner surface part 422 and may be engaged and restrained by the front end of the second rear inner surface part 422a. In addition, the second sealing part 922 of the second sealing member 92 may be attached to the rear surface of the rear panel 33 via the adhesive member 90a.

According to the refrigerator door 21" according to the present embodiment, airtightness can be achieved through the second sealing member 92 even in the panel assembly 30" and door liner 40 structure including the vacuum insulation layer.

## Claims

1. A refrigerator comprising:
a cabinet (10) forming a storage space; and
a door (20) configured to open and close the storage space, wherein the door (20) includes:
- a panel assembly (30) including a front panel (31) forming a front surface of the door (20) and made of a transparent material, and a rear panel (33) disposed at a rear of the front panel (31) and made of a transparent material;
- a door liner (40) forming a rear surface of the door (20) and including a liner opening (40a), wherein the liner opening (40a) is shielded by the rear panel (33);
- an insulation material (100) filled in a space between the door liner (40) and a perimeter of the panel assembly (30); and
- a sealing member (90) disposed between the rear panel (33) and the door liner (40) and sealing the insulation material (100) from the liner opening (40a).

2. The refrigerator of claim 1, wherein the door liner (40) includes:
a rear surface part (41) forming a rear surface of the liner (40), wherein the rear surface part (41) is disposed around the liner opening (40a), ; and
an inner surface part (42) bent forward from the rear surface part (41) and extending toward the rear panel (33), wherein the rear surface part (41) is disposed around the inner surface part (42), and
wherein a front end part of the inner surface part (42) is disposed to face a rear surface of the rear panel (33) and/or to contact a rear surface of the rear panel (33), and
wherein the sealing member (90) is disposed at the rear surface of the rear panel (33) and the front end part of the inner surface part (42) and/or wherein a part of the sealing member (90) is in contact with the rear surface of the rear panel (33) and another part of the sealing member (90) is in contact with the front end part of the inner surface part (42).

3. The refrigerator of claim 2, wherein the sealing member (90) includes:
a first sealing part (911, 921) facing the inner surface part (42) and/or extending in a front-rear direction; and
a second sealing part (912, 922) formed by bending outward from a front end of the first sealing part (911, 921) and facing the rear surface of the rear panel (33).

4. The refrigerator of claim 3, wherein the door liner (40) further includes a guide rib (45, 46) formed on an outer surface of the inner surface part (42), and
wherein the first sealing part (911, 921) is partially inserted into a guide groove (45a, 46a) formed between the inner surface part (42) and the guide rib (45, 46) and/or is partially inserted in a front-rear direction into a guide groove (45a, 46a) formed between the inner surface part (42) and the guide rib (45, 46).

5. The refrigerator of claim 4, wherein the guide rib (45, 46) includes:
a base part (451, 461) protruding from an outer surface of the inner surface part (42); and
a support part (452, 462) protruding forward from the base part (451, 461) and spaced apart from the outer surface of the inner surface part (42), and
wherein the guide groove (45a, 46a) is formed between the support part (452, 462) and the outer surface of the inner surface part (42).

6. The refrigerator of claim 5, wherein an end part of the support part (452, 462) is located at a rear of the second sealing part (912, 922) and/or is in contact with a rear of the second sealing part (912, 922); and/or
wherein a rear end part of the first sealing part (912, 922) is in contact with a front end part of the base part (451, 461).

7. The refrigerator of claim 5 or 6, wherein the inner surface part (42) includes:
a rear inner surface part (421a, 422a) bent forward from the rear surface part (41), wherein the base part (451, 461) is connected to the rear inner surface part (421a, 422a); and
a front inner surface part (421b, 422b) extending forward from the rear inner surface part (421a, 422a), wherein the front inner surface part (421b, 422b) is recessed from the rear inner surface part (421a, 422a) toward the liner opening (40a),
wherein the guide groove (45a, 46a) is formed between the front inner surface part (421b, 422b) and the support part (452, 462).

8. The refrigerator of claim 7, wherein the sealing member (90) further includes a sealing protrusion part (913, 923) protruding from a rear end part of the first sealing part (911, 921) toward an outer surface of the inner surface part (42) to contact the inner surface part (42), and
wherein the sealing protrusion part (913, 923) is restrained by a front end part of the rear inner surface part (421a, 422a).

9. The refrigerator of any one of the preceding claims when depending on claim 4, wherein the panel assembly (30) further includes a spacer (34, 35) provided between the front panel (31) and the rear panel (33) to space apart the front panel (31) from the rear panel (33), and
wherein the spacer (34, 35) and the guide rib (45, 46) overlap in a front-rear direction.

10. The refrigerator of any one of the preceding claims when depending on claim 3, wherein an adhesive material (425) is disposed between the second sealing part (912, 922) and the rear surface of the rear panel (33).

11. The refrigerator of claim 3, wherein the sealing member (90) further includes a sealing protrusion part (913, 923) that protrudes from a rear end part of the first sealing part (911, 921) toward an outer surface of the inner surface part (42) to contact with the inner surface part (42),
wherein the inner surface part (42) includes:
a front inner surface part (421b, 422b) facing the first sealing part (911, 921); and
a rear inner surface part (421a, 422a) extending from the front inner surface part (421b, 422b) in a rear direction and protruding outwardly, and
wherein the sealing protrusion part (913, 923) is restrained by a front end part of the rear inner surface part (421a, 422a).

12. The refrigerator of claim 2, wherein the panel assembly (30) further includes a spacer (34, 35) provided between the front panel (31) and the rear panel (33) to space apart the front panel (31) from the rear panel (33),
wherein a front end part of the inner surface part (42) is in contact with the rear surface of the rear panel (33), and
wherein the rear surface part (41) includes a protrusion part (414) disposed at a rear of the rear panel (33), and the inner surface part (42) extends forward from an inner side of the protrusion part (414), and wherein the protrusion part (414) overlaps the spacer (34, 35) in a front-rear direction.

13. The refrigerator of any one of the preceding claims when depending on claim 2, further comprising a lighting device (80) to illuminate a rear of the door (20);
wherein the inner surface part (42) includes a lighting device mounting part (42a) formed as a cut-out toward a rear direction in the inner surface part (42);and
wherein the lighting device is mounted to the lighting device mounting part (42a), and
wherein the sealing member (90) does not overlap with the lighting device mounting part (42a) in a front-rear direction.

14. The refrigerator of any one of the preceding claims when depending on claim 2, wherein the rear surface part (41) includes a protrusion part (414) disposed at a rear of the rear panel (33), and the inner surface part (42) extends forward from an inner side of the protrusion part (414), wherein the protrusion part (414) and the inner surface part (42) surround the liner opening (40a), and
wherein the inner surface part (42) includes:
a first inner surface part (421) forming an upper end of the liner opening (40a);
a second inner surface part (422) forming both side ends of the liner opening (40a); and
a third inner surface part (423) forming a lower end of the liner opening (40a), and
wherein the sealing member (90) is coupled to the first inner surface part (421) and the second inner surface part (422).

15. The refrigerator of claim 14, wherein the door liner (40) further includes:
a first guide rib (45) formed on an outer surface of the first inner surface part (421), and
a second guide rib (46) formed on an outer surface of the second inner surface part (422);
wherein the sealing member (90) includes:
a first sealing part (911, 921) facing the inner surface part (42) and/or extending in a front-rear direction; and
a second sealing part (912, 922) formed by bending outward from a front end of the first sealing part (911, 921) and facing a rear surface of the rear panel (33), and
wherein the first sealing part (911, 921) is partially inserted into each of a first guide groove (45a) formed between the first inner surface part (421) and the first guide rib (45), and a second guide groove (46a)formed between the second inner surface part (422) and the second guide rib (46).
